# EUROPEAN PATENT SPECIFICATION

(11) **EP 3 296 208 B1**
(45) Date of publication and mention of the grant of the patent: **03.07.2019**
(21) Application number: 16382425.3
(22) Date of filing: 14.09.2016
(51) Int. Cl.: B64D 13/06

(54) **AIRCRAFT INCORPORATING A CABIN AIR RECOVERY SYSTEM**
FLUGZEUG MIT EINEM KABINENLUFTRÜCKGEWINNUNGSSYSTEM
AERONEF COMPRENANT UN SYSTEME DE RECUPERATION D'AIR DE CABINE

(43) Date of publication of application: 21.03.2018
(73) Proprietor: Airbus Operations, S.L., 28906 Getafe (Madrid) (ES)
(72) Inventor: FRAILE MARTIN, Javier, 28906 GETAFE (Madrid) (ES); MENDEZ-DIAZ, Anton, 28906 GETAFE (Madrid) (ES)
(74) Representative: Herrero & Asociados, S.L.

(56) References cited:
- EP-A2- 0 888 966
- US-A- 5 461 882
- US-A- 5 482 229

## Description

### Object of the invention

The present invention refers in general to aircraft air systems, like bleed air and air-conditioning systems.

An object of the invention is to reduce fuel consumption due to the extraction of cooling air from the engine fan duct.

A second object of the invention is to reduce fuel consumption due to the use of ram air by the air conditioning packs.

Another object of the invention is to eliminate aircraft operational interruptions caused by failure of the bleed air leak detection system.

### Background of the invention

Most current civil aircrafts incorporate a bleed system that take pressurized air from the engine compressors, to be used as a source of pressurized air for cabin pressurization and temperature conditioning purposes.

In order to provide the air conditioning packs with air at a certain temperature lower than the engine compressors temperature, the bleed system cools down bleed air taken from the engine by means of heat exchangers, in which the hot bleed air is mixed with cold air extracted from the engine fan duct, and thus cooled down to the required temperature. However, extracting cold air from the engine fan duct decreases engine efficiency and increase fuel consumption.

Additionally, traditional systems limit the reduction of temperature of the air from the engine compressors to reduce the fan air extraction among other reasons.

On the other hand, bleed air is routed along the aircraft to its consumers by means of ducts through which hot air flows. In order to detect hot air leaks that could be fatal to some aircraft components, an overheat detection system or bleed air leaks detection system is installed all along the bleed duct routing. This detection system is not only costly in terms of installation, but it has a low reliability and is responsible for some operational interruptions.

An important portion of the air supplied to the cabin for pressurisation and temperature conditioning has to be fresh air, which means that part of the air is discharged overboard with no real energy recovery.

In some existing aircrafts, this air is discharged through an outflow nozzle trying to recover some small thrust, but the efficiency of this technique has proven to be very low.

Some examples of the state of the art can be seen on US5482229, US5461882 and EP0888966.

### Summary of the invention

The present invention is defined in the attached independent claim, and it based on the use of cabin excess air, (that is traditionally discharged to the atmosphere with no effective energy recovery), to cool down the main engines bleed air, thus eliminating the need of extracting cooling air from the engine fan duct or from the atmosphere by means of RAM air doors.

One aspect of the invention refers to an aircraft incorporating a cabin air recovery system, wherein the aircraft conventionally comprises: a cabin and an air conditioning system for modifying the cabin air temperature, at least one cabin discharged air duct for conducting discharged air out of the cabin, and a bleed system for supplying hot and pressurized air, extracted from a compressor stage of the main engine, to the air conditioning system and for cabin pressurization.

The bleed system comprises at least one bleed air duct, for conducting main engine bleed air to the air conditioning system.

According to the invention, the cabin discharged air duct and the main engine bleed air duct are thermally coupled, so that heat can be transferred from the main engine bleed air, typically between 200°C and 500°C, to the cabin discharged air, typically around 25°C, to cool down the main engine bleed air.

Therefore, the cabin air recovery system of the invention comprises a thermally coupled region between ducts for conducting the bleed air and the cabin discharged air respectively, such as at this thermally coupled region, these two ducts configure a heat exchanger.

In a preferred embodiment of the invention, the inner bleed air duct is insulated, since depending on the application, the need to tap off air close to the engine compressor may require to concentrate the heat exchange between bleed air and cabin air as close as possible to the engine (e.g. for servicing the wing anti-ice system).

A technical effect derived from this configuration, is that, instead of using cold air extracted from the engine fan duct or from the atmosphere by means of RAM air doors, excess air discharged from the cabin, is re-used as a heat sink to cool down the main engine bleed air. Additionally, the preheated cabin discharged air is ejected to the atmosphere providing some thrust to the aircraft.

Another technical effect of the invention, is that colder bleed air is supplied to the air conditioning packs inlet without fan air extraction penalty. This makes possible to reduce the ram air consumed by the air conditioning packs.

This thermally coupled region preferably is obtained by placing at least a part of the main engine air bleed duct, housed within the cabin discharged air duct, which can be implemented for example by means of a double duct, wherein the bleed air would flow through the inner duct, and the discharged cabin air would flow through the outer duct.

To make the installation design of the outer cabin air duct easier, the invention includes as well the possibility of using a more flexible fabric or cloth-type material that will be able to accommodate the deflections of the inner bleed air duct, to cope with potential hot air leakages or burst of the inner duct and to reduce the heat exchange between the cabin air and the surrounding environment.

Since the main engine air bleed duct is confined inside the cabin discharged air duct, the hot and pressurized bleed, flowing inside the air bleed duct, is protected by two tubular walls and surrounded by the much colder cabin air. In this way, the risk of a hot air leak is significantly reduced to the extent that the Overheat Detection System can be even eliminated or simplified leading an increase of its associated reliability.

Preferably the thermally coupled region extends from a cabin discharge air output to a main engine port, and the heat exchange is enhanced at the aircraft pylon and/or nacelle area.

The advantages of the invention can be summarized as follows:
- Specific fuel consumption reduction due to the elimination of fan air extraction, ram air consumption by air conditioning packs plus thrust recovery;
- Reliability & Operational Interruption improvement due to the elimination of the bleed air leak detection system;
- Drag reduction due to the reduction of the use of Ram doors;
- System maintenance costs reduction.

### Brief description of the drawings

Preferred embodiments of the invention are henceforth described with reference to the accompanying drawings, wherein:
Figure 1.- is a perspective view of an aircraft incorporating a cabin air recovery system according to the invention.
Figure 2.- is a schematic diagram illustrating in more detail the cabin air recovery system according to the invention.
Figure 3.- is a schematic representation of a cross-sectional view of the double duct.
Figure 4.- is a schematic representation of a longitudinal-sectional view of a double duct incorporating fins.

### Preferred embodiment of the invention

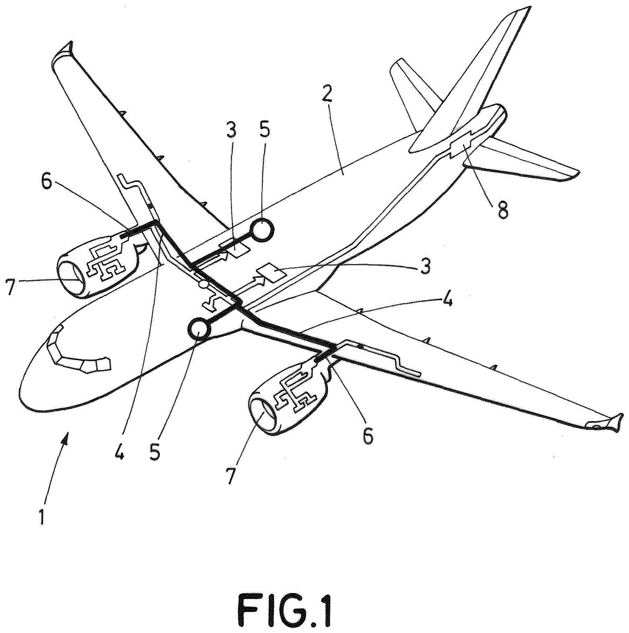

Figure 1 shows a double-engine commercial aircraft (1) comprising a cabin (2) and an air conditioning system having an air conditioning Packs (3), and a double duct (4) configuring a thermally coupled region between the bleed air duct and the cabin discharged air duct. The double duct (4) extends from a cabin discharge air output (5) towards the pylon area, and runs through part of the fuselage, wings, pylons and nacelles.

Conventionally, the aircraft includes an Auxiliary Power Unit (8) to provide pressurized air for the air conditioning system, when the aircraft in on ground.

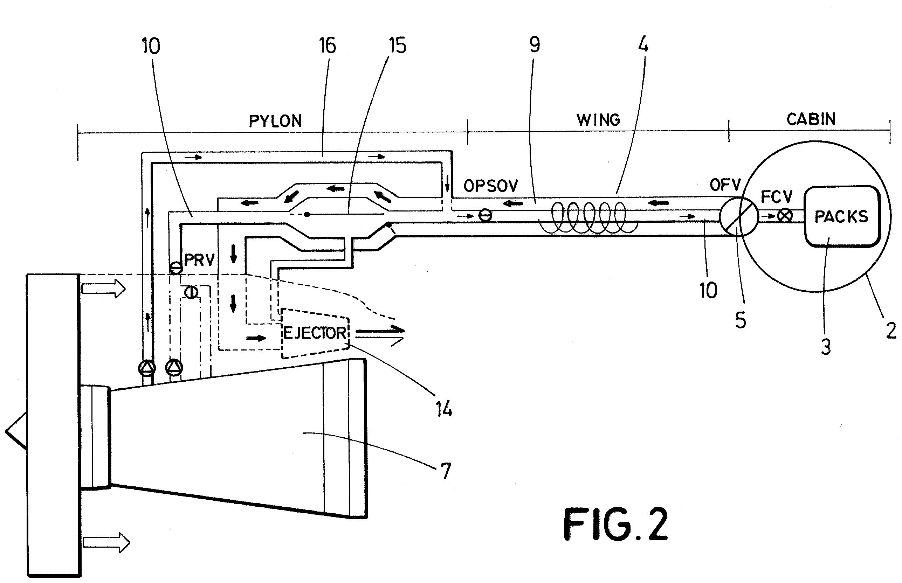

Figure 2. shows in more detail the cabin air recovery system. The double duct (4) extends from a cabin (2) discharge air output (5) towards the engine pylon area, and it is formed by an outer duct (9) which corresponds to the cabin discharged air duct, and an inner duct (10), confined inside the outer duct (9), which corresponds to the bleed air duct.

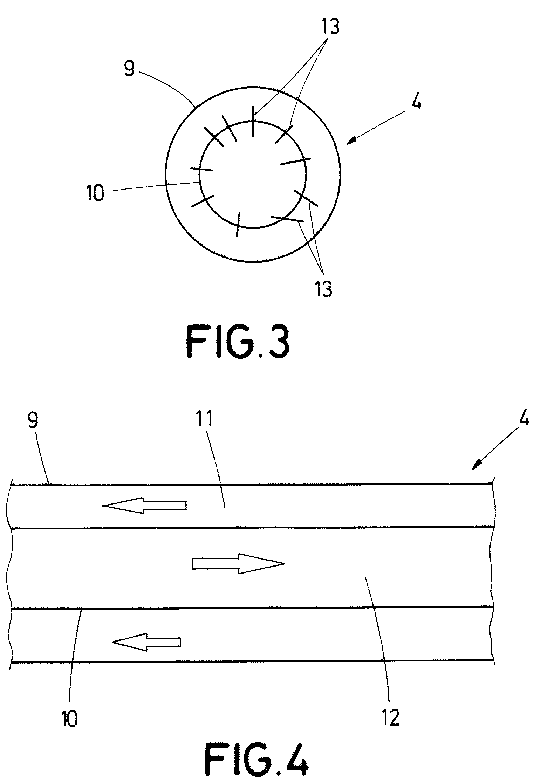

The double duct (4) is shown in more detail in figures 3 and 4, wherein it would be noted that the inner duct (10) is preferably arranged co-centrically with the outer duct (9). Both ducts are thermally coupled and configure a thermally coupled region, for the heat transfer from the bleed air (12) to the cabin discharged air (11) to cool down the main engine bleed air.

The cabin discharged air is ejected to the aircraft exterior through an ejector (14) located at the output end of the cabin discharged air duct, and arranged opposite the aircraft flight direction, in order to additionally re-use the cabin discharged air to provide some thrust for the aircraft. This ejector (14) could for example be located at the pylon trailing edge.

Alternatively and instead of ejecting cabin discharged air to the aircraft exterior, the energy of the cabin discharged air is recovered by injecting this air to one of the gas turbine compressor stages.

Alternatively the ejector (14) includes a variable area controlled nozzle to throttle the cabin air, thus controlling the final bleed air temperature supply to the consumer and/or the desired thrust recovery, and in this case the air output (5) would be an on-off valve.

Furthermore, the double duct (4) is arranged in the system, such as the main engine bleed air (11) and the cabin discharged air (12), would flow in opposite directions in a known manner to enhance the heat transfer.

As shown in figure 4, the double duct (4) has a plurality of fins (13) mounted at the inner duct (10) radially arranged and having a part inside the inner duct (10) and another part inside the outer duct (9). These fins (13) increase the heat transfer between the fluids flowing through the outer and inner ducts (9,10).

Preferably, the fins (13) are located at the pylon and/or nacelle areas, so that most of the heat exchange, is carried out at the aircraft pylons and nacelles. Since the pylons and nacelles are already constructed to withstand high temperatures, the advantage of having most of the heat transfer at this structures, is that the consequences of a potential damage or rupture of the double duct (4), are minimized.

Figure 2 also shows one of the aircraft main engines, a gas turbine (7) in this case, and a main engine bleed air system for supplying pressurized air to the air conditioning Packs (3). This bleed air system comprises a bleed air duct which is the inner duct (10) of the double duct (4), and it is connected between one port (14) at a compressor stage of the gas turbine (7), and the air conditioning Packs (3) through corresponding valves.

As it can be observed in figure 2, hot and pressurized air is extracted from the gas turbine (7), conducted through the inner duct (10) towards the air conditioning Packs (3) at the same time that it is cooled down progressively at the double duct (4), as the much colder cabin discharged air is heated up.

In the preferred embodiment of figure 2, a heat exchanger (15) is operatively coupled with the double duct (4) in order to further increase, whenever necessary, the heat transfer from the main engine bleed air to the cabin discharged air. A by-pass duct (16) is provided by-passing the heat exchanger (15).

In other preferred embodiments of the invention and depending on the cooling energy needs of the bleed air or any other source of compressed air, the system comprises (not shown in the figures):
- A compressed air ejector or jet pump, to compensate insufficient cabin differential pressure to cabin air discharge point.
- A compressed air tapping at the air conditioning pack, to compensate insufficient cabin air available for cooling purposes depending on the amount of compressed air to be cooled down (e.g. depending on consumers like ECS, Wing-anti-icing, cabin leakages...etc). This compressed air tapping can be located for instance at the primary heat exchanger outlet (upstream the compressor), or at the secondary heat exchanger outlet (this heat exchanger is placed downstream the air conditioning pack compressor). A non-return valve will be fitted at the cabin air flow path to avoid reverse flow of this compressed air towards the cabin.

Other preferred embodiments of the present invention are described in the appended dependent claims and the multiple combinations of those claims.

## Claims

1. An aircraft (1) incorporating a cabin air recovery system, the aircraft (1) comprising:
a cabin (2) and an air conditioning system for modifying the cabin air temperature,
a cabin discharged air duct for conducting air discharged out of the cabin (2),
a main engine bleed system for supplying pressurized air, extracted from the main engine, to the air conditioning system,
the main engine bleed system comprising a bleed air duct for conducting main engine bleed air (12),
wherein the cabin discharged air duct and the bleed air duct are thermally coupled, such as heat can be transferred from the main engine bleed air (12) to the cabin discharged air (11), to cool down the main engine bleed air (12),
wherein the thermally coupled region is configured as a double duct (4), having an outer duct (9) and an inner duct (10) housed within the outer duct (9),
and wherein the outer duct (9) is the cabin discharged air duct and the inner duct (10) is the bleed air duct, so that the bleed air duct is housed within the cabin discharged air duct;
**characterised in that** the aircraft (1) further comprises
a heat exchanger (15) operatively coupled with the double duct (4)
to increase the heat transfer from the main engine bleed air (12) to the cabin discharged air (11) whenever necessary; and
a by-pass duct (16) by-passing the heat exchanger (15).

2. An aircraft (1) according to claim 1 further comprising a pylon for mounting a main engine, and wherein the thermally coupled region extends internally through the pylon.

3. An aircraft (1) according to claim 2 further comprising a nacelle for housing a main engine, and wherein said thermally coupled region additionally extends internally through the nacelle.

4. An aircraft (1) according to claim 1 wherein the double duct (4) extends from a cabin discharge air output (5) to a main engine port.

5. An aircraft (1) according to claim 4, wherein the double duct (4) comprises a plurality of fins (13) at the pylon, the fins (13) being radially arranged and mounted at the inner duct (10).

6. An aircraft (1) according to any of the preceding claims, wherein the cabin discharged air duct and the bleed air duct are arranged such as, the main engine bleed air (12) and the cabin discharged air (11), would flow in opposite directions.

7. An aircraft (1) according to any of the preceding claims, further comprising an ejector (14) at the output end of the cabin discharged air duct, the ejector (14) arranged opposite the aircraft flight direction.

8. An aircraft (1) according to any of the preceding claims, wherein the main engine is a gas turbine (7).

## Patentansprüche

1. Flugzeug (1), das ein Kabinenluftwiederherstellungssystem aufweist, wobei das Flugzeug (1) Folgendes aufweist:
eine Kabine (2) und ein Klimatisierungssystem zum Modifizieren der Kabinenlufttemperatur,
einen Kabinenabgabeluftkanal zum Leiten von Luft, die aus der Kabine (2) abgegeben wird,
ein Hauptmaschinenentlüftungssystem, das einen Zapfluftkanal zum Leiten von Hauptmaschinenzapfluft (12) aufweist,
wobei der Kabinenabgabeluftkanal und der Zapfluftkanal thermisch gekoppelt sind, so dass Wärme von der Hauptmaschinenzapfluft (12) zu der Kabinenabgabeluft (11) hin übertragen werden kann, um die Hauptmaschinenzapfluft (12) herab zu kühlen,
wobei der thermisch gekoppelte Bereich als ein Doppelkanal (4) gestaltet ist, der einen äußeren Kanal (9) und einen inneren Kanal (10) hat, der innerhalb des äußeren Kanals (9) untergebracht ist,
und wobei der äußere Kanal (9) der Kabinenabgabeluftkanal ist und der innere Kanal (10) der Zapfluftkanal ist, so dass der Zapfluftkanal innerhalb des Kabinenabgabeluftkanals untergebracht ist;
**dadurch gekennzeichnet, dass** das Flugzeug (1) ferner Folgendes aufweist
einen Wärmetauscher (15), der mit dem Doppelkanal (4) wirkverbunden ist, um den Wärmeübergang von der Hauptmaschinenzapfluft (12) zu der Kabinenabgabeluft (11) zu erhöhen, wann immer dies notwendig ist; und
einen Umgehungskanal (16), der den Wärmetauscher (15) umgeht.

2. Flugzeug (1) nach Anspruch 1, ferner mit einem Pylon zum Montieren einer Hauptmaschine, und wobei der thermisch gekoppelte Bereich sich innerlich durch den Pylon hindurch erstreckt.

3. Flugzeug (1) nach Anspruch 2, ferner mit einer Gondel zum Unterbringen einer Hauptmaschine, und wobei der thermisch gekoppelte Bereich sich außerdem innerlich durch die Gondel hindurch erstreckt.

4. Flugzeug (1) nach Anspruch 1, wobei sich der Doppelkanal (4) von einem Kabinenabgabeluftauslass (5) zu einem Hauptmaschinenanschluss erstreckt.

5. Flugzeug (1) nach Anspruch 4, wobei der Doppelkanal (4) eine Vielzahl von Lamellen (13) an dem Pylon aufweist, wobei die Lamellen (13) radial angeordnet sind und an dem inneren Kanal (10) montiert sind.

6. Flugzeug (1) nach einem der vorangehenden Ansprüche, wobei der Kabinenabgabeluftkanal und der Zapfluftkanal derart angeordnet sind, dass die Hauptmaschinenzapfluft (12) und die Kabinenabgabeluft (11) in entgegengesetzte Richtungen strömen würden.

7. Flugzeug (1) nach einem der vorangehenden Ansprüche, ferner mit einem Ejektor (14) an dem Ausgangsende des Kabinenabgabeluftkanals, wobei der Ejektor (14) entgegengesetzt zu der Flugzeugflugrichtung angeordnet ist.

8. Flugzeug (1) nach einem der vorangehenden Ansprüche, wobei die Hauptmaschine eine Gasturbine (7) ist.

## Revendications

1. Aéronef (1) incorporant un système de récupération d'air de cabine, l'aéronef (1) comprenant :
une cabine (2) et un système de climatisation pour modifier la température de l'air de la cabine,
un conduit d'air déchargé de cabine pour amener de l'air déchargé hors de la cabine (2),
un système de purge de moteur principal pour fournir de l'air sous pression, extrait du moteur principal, au système de climatisation,
le système de purge de moteur principal comprenant un conduit d'air de purge pour amener de l'air de purge de moteur principal (12),
dans lequel le conduit d'air déchargé de cabine et le conduit d'air de purge sont thermiquement couplés, de sorte que de la chaleur peut être transférée de l'air de purge de moteur principal (12) à l'air déchargé de cabine (11), afin de refroidir l'air de purge de moteur principal (12),
dans lequel la région couplée thermiquement est configurée comme un conduit double (4), ayant un conduit externe (9) et un conduit interne (10) logé à l'intérieur du conduit externe (9),
et dans lequel le conduit externe (9) est le conduit d'air déchargé de cabine et le conduit interne (10) est le conduit d'air de purge, de sorte que le conduit d'air de purge est logé à l'intérieur du conduit d'air déchargé de cabine ;
**caractérisé en ce que** l'aéronef (1) comprend en outre
un échangeur de chaleur (15) couplé de manière opérationnelle avec le conduit double (4) afin d'augmenter le transfert de chaleur de l'air de purge de moteur principal (12) à l'air déchargé de cabine (11) chaque fois que cela est nécessaire ; et
un conduit de dérivation (16) contournant l'échangeur de chaleur (15).

2. Aéronef (1) selon la revendication 1 comprenant en outre un pylône pour monter un moteur principal, et dans lequel la région couplée thermiquement s'étend intérieurement à travers le pylône.

3. Aéronef (1) selon la revendication 2 comprenant en outre une nacelle pour loger un moteur principal, et dans lequel ladite région couplée thermiquement s'étendadditionnellement intérieurement à travers la nacelle.

4. Aéronef (1) selon la revendication 1 dans lequel le conduit double (4) s'étend d'une sortie d'air de décharge de cabine (5) à un orifice de moteur principal.

5. Aéronef (1) selon la revendication 4, dans lequel le conduit double (4) comprend une pluralité d'ailettes (13) au niveau du pylône, les ailettes (13) étant agencées radialement et montées au conduit interne (10).

6. Aéronef (1) selon l'une quelconque des revendications précédentes, dans lequel le conduit d'air déchargé de cabine et le conduit d'air de purge sont agencés de sorte que, l'air de purge de moteur principal (12) et l'air déchargé de cabine (11), s'écoulent dans des directions opposées.

7. Aéronef (1) selon l'une quelconque des revendications précédentes, comprenant en outre un éjecteur (14) à l'extrémité de sortie du conduit d'air déchargé de cabine, l'éjecteur (14) étant agencé à l'opposé de la direction de vol de l'aéronef.

8. Aéronef (1) selon l'une quelconque des revendications précédentes, dans lequel le moteur principal est une turbine à gaz (7).
